# EUROPEAN PATENT APPLICATION

(11) **EP 1 906 299 A2**
(43) Date of publication of application: **02.04.2008**
(21) Application number: 07116208.5
(22) Date of filing: 12.09.2007
(51) Int. Cl.: G06F 3/048

(54) **Portable device and method for displaying menu in portable device**

(30) Priority: 26.09.2006 KR 20060093421
(71) Applicant: Samsung Electronics Co., Ltd., Suwon-si, Gyeonggi-do 442-743 (KR)
(72) Inventor: Bae, Dong Hwan c/o Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

A method and apparatus for displaying a menu on a display unit of a portable device having an input unit such as a jog input unit freely movable in multiple directions are provided. After the input unit is pressed, a display unit displays a reference point and first depth menu items at positions distributed around the reference point. Subsequently, after the input unit is moved in a first direction, a first depth menu item corresponding to the first direction is activated. The display unit may then display second depth menu items of the activated first depth menu item at positions that are either distributed around the activated first depth menu item, or alternatively, at positions to which the first depth menu items are allocated. After the input unit is moved in a second direction, a second depth menu item corresponding to the second direction may be activated.

## Description

### BACKGROUND OF THE INVENTION

### 1. Field of the Invention

The present invention relates to a portable device, and more particularly, to a method for displaying a menu on a display unit of a portable device having an input unit such as a jog input unit freely movable in multiple directions and a portable device for implementing the method.

### 2. Description of the Related Art

Due to the widespread advancement of semiconductor Integrated Circuit (IC) technologies and information and communication technologies, various types of portable devices such as Personal Digital Assistants (PDAs) have become an important aspect of modern life. Most portable devices are compact and portable, enabling users to carry them. Thus, an input unit for a portable device has various limitations in terms of human engineering aspects of designs.

To reduce such limitations, a diverse number of simple, easy-to-manipulate input units for portable devices have been developed. For example, a jog key and a touch pad are input devices capable of generating an input signal corresponding to movement of a user's finger.

As input units for a portable devices become easier or more intuitive to use, there arises a need for improved methods for displaying a menu on a screen of a display unit and moving to a new screen. Conventionally, when various menu items are displayed on a screen in a regularly arranged pattern, a user moves through menu items to select a specific desired item. Thus, as the number of menu items being displayed on a single screen increases, it becomes more complicated and difficult to find a desired item in a menu.

### SUMMARY OF THE INVENTION

In order to solve the above problems, the present invention provides a method for displaying a menu on a display unit of a portable device that enables a convenient, intuitive menu search, and movement to a new screen on the display unit.

The present invention also provides a method for displaying a menu suitable for a portable device having an input unit such as a jog input unit that can freely move in multiple directions.

In accordance with an exemplary embodiment of the present invention, a portable device includes an input unit movable within a predetermined region in at least four directions; a display unit for allocating a menu item to at least one direction in which the input unit is movable, displaying the allocated menu items, activating a menu item allocated to a direction in which the input unit is moved, and displaying the activated menu item; and a controller for controlling the display unit to display menu items at positions corresponding to directions in which the input unit is movable and at positions corresponding to a direction in which the input unit is moved.

The predetermined region may have a polygonal shape with at least four sides, and the vertexes of the polygonal shape may be located corresponding to the directions in which the input unit is movable. The display unit may be controlled by the controller to display submenu items of the activated menu item around the activated menu item, at positions corresponding to the directions in which the input unit is movable.

In accordance with another exemplary embodiment of the present invention, a portable device includes an input unit having a reference position and movement positions located in at least four directions with respect to the reference position; a detection sensor for detecting the position of the input unit; a display unit for displaying menu items at positions corresponding to the movement positions of the input unit; and a controller for receiving the position of the input unit from the detection sensor and controlling the display unit to display menu items according to the received position.

The controller may control, if the received position of the input unit is the reference position, the display unit to display a reference point corresponding to the reference position and first depth menu items at positions corresponding to the movement positions of the input unit with respect to the reference position.

The controller may control, if the received position of the input unit moves to one of the movement positions, the display unit to activate a first depth menu item corresponding to a new position of the input unit and display the activated first depth menu item, and to display second depth menu items of the activated first depth menu item at positions corresponding to the movement positions of the input unit with respect to the first depth menu item.
According to another exemplary embodiment of the present invention, a method for displaying a menu in a portable device having a display unit and an input unit movable within a predetermined region in at least four directions includes allocating a menu item to at least one direction in which the input unit is movable and displaying the allocated menu items on the display unit; receiving a direction in which the input unit is moved; and activating a menu item allocated to the direction of movement of the input unit.

According to another exemplary embodiment of the present invention, a method for displaying a menu in a portable device having a display unit and having an input unit having a reference position and movement positions located in at least four directions with respect to the reference position includes receiving the position of the input unit; displaying, if the received position of the input unit is the reference position, a reference point corresponding to the reference position on the display unit; and displaying first depth menu items on the display unit at positions corresponding to the movement positions.

The method may further include activating, if the received position of the input unit moves to one of the movement positions, a first depth menu item corresponding to a new position of the input unit and displaying the activated first depth menu item; and displaying second depth menu items of the activated first depth menu item around the activated first depth menu item at positions corresponding to the movement positions.

According to another exemplary embodiment of the present invention, a method for displaying a menu in a portable device having a display unit and an input unit movable within a predetermined region in at least four directions includes receiving a signal generated by pressing the input unit; displaying a reference point on the display unit; displaying first depth menu items at positions to which the first depth menu items are allocated and that are distributed around the reference point; receiving a signal generated by moving the input unit in a first direction; and activating a first depth menu item corresponding to the first direction among the first depth menu items.

The method may further include displaying second depth menu items of the activated first depth menu item at positions to which the second depth menu items are allocated and that are distributed around the activated first depth menu item. Alternatively, the method may further include allocating the activated first depth menu item to the reference point and displaying the first depth menu item; and displaying second depth menu items of the activated first depth menu item at positions to which the first depth menu items are allocated. The method may further include receiving a signal generated by moving the input unit in a second direction; and activating a second depth menu item corresponding to the second direction among the second depth menu items.

### BRIEF DESCRIPTION OF THE DRAWINGS

The objects, features and advantages of the present invention will be more apparent from the following detailed description in conjunction with the accompanying drawings, in which:
FIG. 1 is a schematic plan view illustrating a portable device according to an exemplary embodiment of the present invention;
FIGS. 2A and 2B are schematic cross-sectional views illustrating a manner of manipulating a jog input unit in the portable device of FIG. 1;
FIG. 3 illustrates states in which the jog input unit in the portable device of FIG. 1 is located at movement positions in six directions;
FIGS. 4A through 4G are display screen examples illustrating a method for displaying a menu in a portable device according to another exemplary embodiment of the present invention;
FIG. 5 is a diagram illustrating an example of distribution of points on a portable device to which menu items are allocated according to another exemplary embodiment of the present invention;
Fig. 6 is a block diagram illustrating a configuration of a portable device according to another exemplary embodiment of the present invention;
FIG. 7 is a flowchart illustrating a method for displaying a menu in a portable device according to another exemplary embodiment of the present invention;
FIGS. 8A and 8B are display screen examples illustrating a portable device performing another method for displaying a menu in a portable device according to another exemplary embodiment of the present invention; and
FIG. 9 is a flowchart illustrating another method for displaying a menu in a portable device according to another exemplary embodiment of the present invention.

### DETAILED DESCRIPTION OF EXEMPLARY EMBODIMENTS

Hereinafter, exemplary embodiments of the present invention are described in detail with reference to the accompanying drawings. The same reference numbers are used through the drawings to refer to the same or like parts. Detailed descriptions of well-known functions and constructions incorporated herein may be omitted to avoid obscuring the subject matter of the present invention.

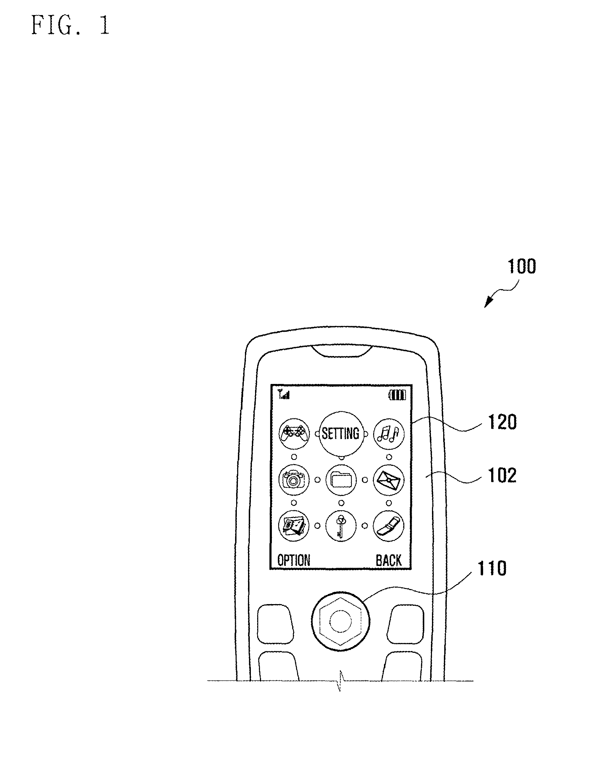

Referring to FIG. 1, the portable device 100 includes a main body 102, a jog input unit 110 and a display unit 120 disposed at one side of the main body 102. A screen of the display unit 120 illustrated in FIG. 1 is an initial screen (or main screen) displayed using a typical method for displaying a menu. Throughout the detailed description, a menu refers to a list of items for performing desired tasks that has a plurality of depths. The jog input unit 110 is an input device that can freely move in multiple directions, and generates an input signal corresponding to movement by a user's finger

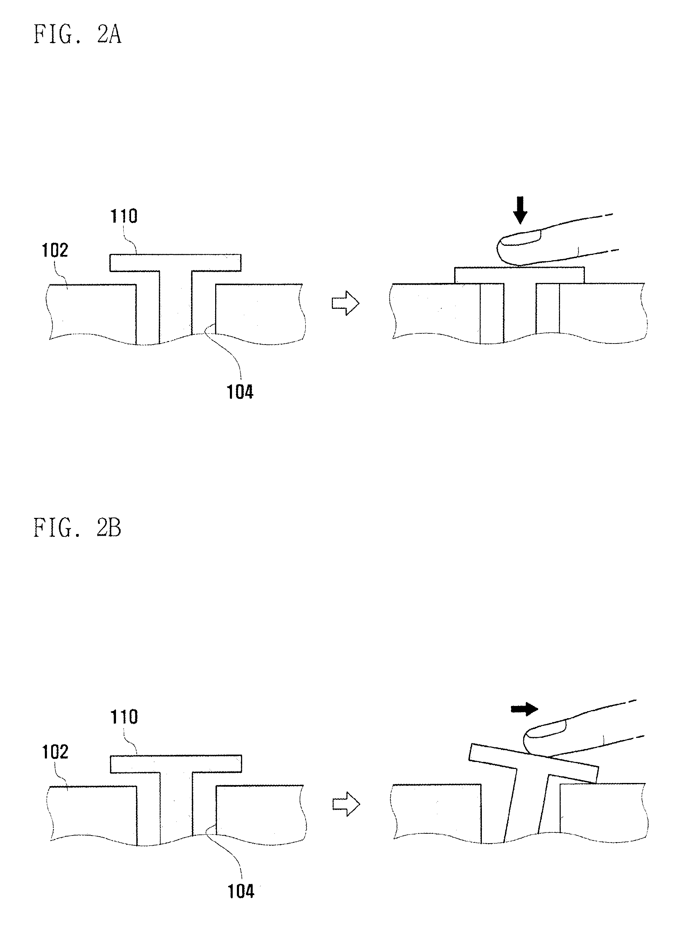

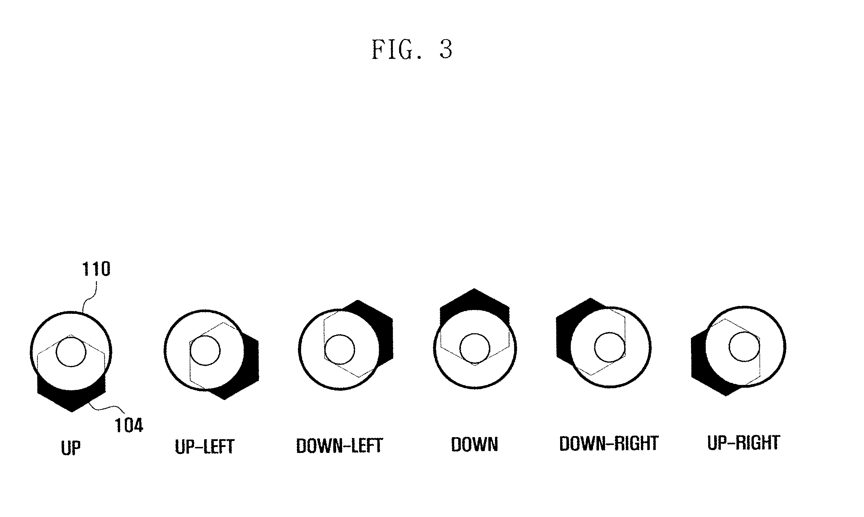

Referring to FIGS. 2A, 2B, and 3, the jog input unit 110 is located within a movement space 104 formed at a predetermined region of the main body 102. The movement space 104 has a polygonal shape such as a quadrangular, hexagonal, or octagonal shape. FIG. 3 shows a hexagonal example of the movement space 104. The jog input unit 110 is elastically fixed at the center of the movement space 104 and projects outwards from the center of the main body 102. The jog input unit 110 may be pressed further into the movement space 104 as illustrated in FIG. 2A, and pulled or pushed in a predetermined direction, as illustrated in FIG. 2B. When released by removing a finger, the jog input unit 110 returns to its idle position by an elastic force.

Although the jog input unit 110 may be freely moved in any direction, the direction in which the jog input unit 110 moves can be defined according to the shape of the movement space 104. For example, if the movement space 104 has a hexaagonal shape, the jog input unit 110 may move in six directions: up, up-left, down-left, down, down-right, and up-right. In this case, a vertex of the polygonal movement space 104 is located corresponding to the direction of movement of the jog input unit 110, thus improving the preciseness of input and user manipulation performance.

Although the jog input unit 110 is used as an input device in the present embodiment, the input device may be any device that can sense movement of a user's finger and produce an input signal corresponding to movement of the finger.

FIGS. 4A through 4G are display screen examples illustrating a method for displaying a menu in a portable device according to another exemplary embodiment of the present invention.

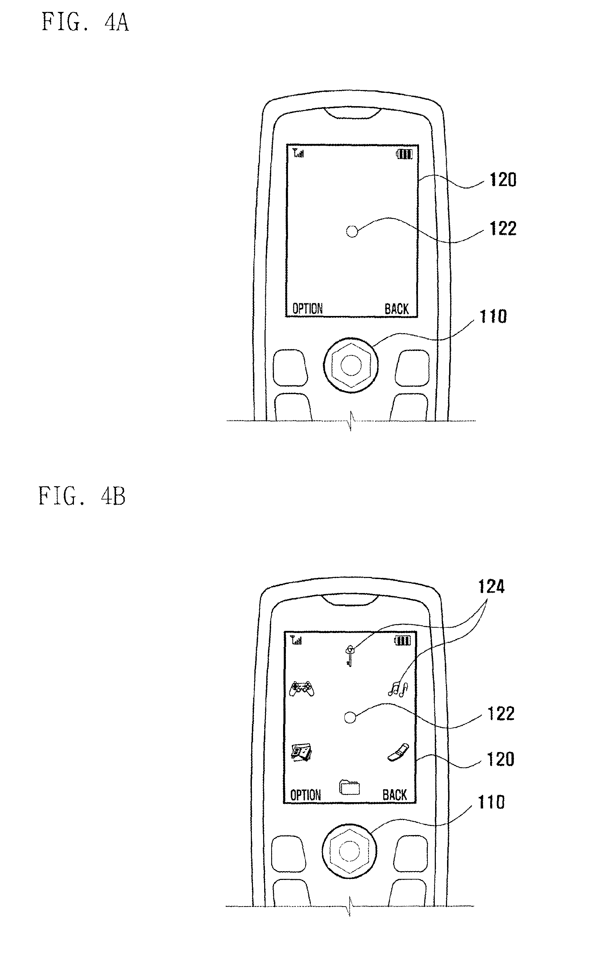

FIG. 4A illustrates a step of displaying a reference point 122. If a jog input unit 110 is pressed as illustrated in FIG. 2A, menu items on an initial screen disappear from a display unit 120 and the reference point 122 appears at the center thereof. Thereafter, as illustrated FIG. 4B, the display unit 120 displays six first depth menu items 124 around the reference point 122. The first depth menu items 124 are displayed at positions corresponding to directions in which the jog input unit 110 is movable. The first depth menu items 124 are displayed after a predetermined time duration from when the reference point 122 appears. For example, the predetermined time duration may be set 0.5 sec, or to any value desired.

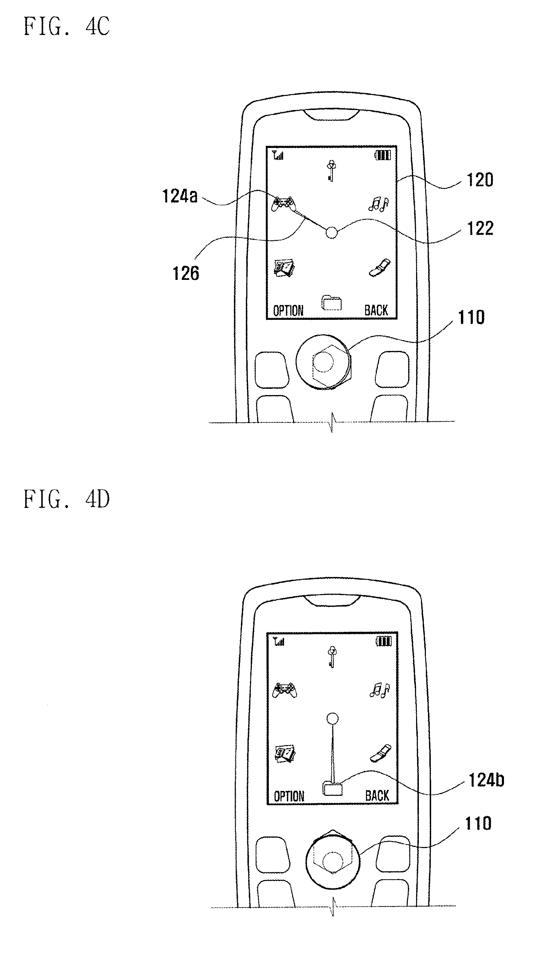

If the jog input unit 110 is then simultaneously pressed and pushed upwards to the left as illustrated in FIG. 4C, a specific first depth menu item 124a located in the direction of movement of the jog input unit 110 is selectively activated while the reference point 122 and the remaining first depth menu items 124 are inactivated. A connecting line 126 is displayed between the reference point 122 and the activated first depth menu item 124a to indicate the direction of movement of the jog input unit 110. After the first depth menu item 124a is selected, the jog input unit 110 may be moved to another first depth menu item 124b. FIG. 4D shows an example in which the jog input unit 110 is moved downwards. Referring to FIG. 4D, when the jog input unit 110 is moved in this way, the first depth menu item 124b to which the jog input unit is now moved is activated while the remaining first depth menu items 124 are inactivated.

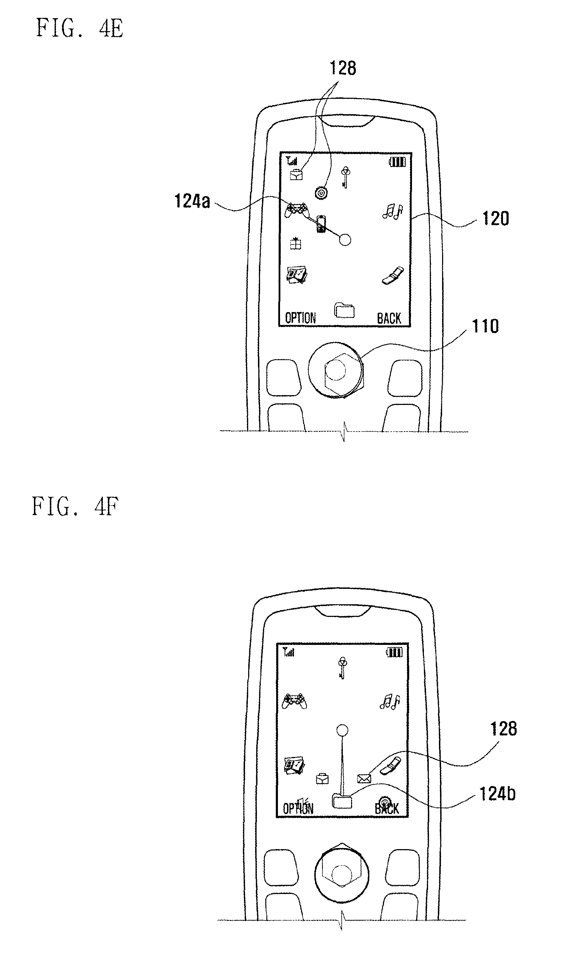

When a predetermined time duration (e.g., 0.5 sec) has elapsed after the first depth menu item 124a is selected and activated as illustrated in FIG. 4C, second depth menu items 128 are displayed around the activated first depth menu item 124a, as illustrated in FIG. 4E. The second depth menu items 128 are displayed at positions corresponding to directions in which the jog input unit 110 is movable. FIG. 4F illustrates another example in which the second depth menu items 128 are displayed around the activated first depth menu item 124b.

As illustrated in FIGS. 4E and 4F, the second depth menu items 128 are not displayed in all directions in which the jog input unit 110 is movable. For example, while the jog input unit 110 is movable in five directions except the current one, the second depth menu items 128 can be displayed at four positions. Referring to FIG. 4E, when the jog input unit 110 is moved in the up-left direction, the second depth menu items 128 are displayed at points corresponding to four directions (up, up-right, down-right, down) with respect to the jog input unit 110. Referring to FIG. 4F, when the jog input unit 110 is moved in the down direction, the second depth menu items 128 are displayed at points corresponding to four directions (down-left, up-left, up-right, down-right).

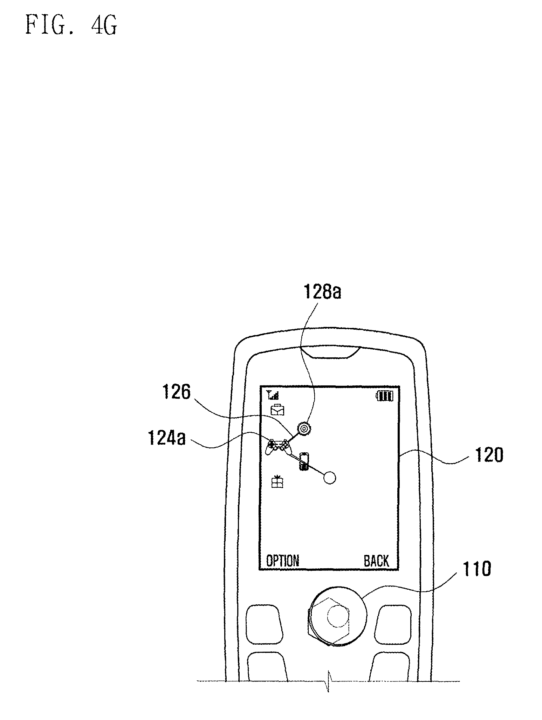

Referring to FIG. 4G, in a state in which the first depth menu item 124a located in the up-left direction is selected and activated and the second depth menu items 128 are displayed around the first depth menu item 124a as illustrated in FIG. 4E, if the jog input unit 110 is pressed and pushed upwards to the right, only a second depth menu item 128a located in the direction of movement of the jog input unit 110 is activated. The reference point 122, the first depth menu item 124a and the remaining second depth menu items 128 are inactivated. The connecting line 126 is displayed between the reference point 122 and the activated second depth menu item 128a.

As described above, a method for displaying a menu according to the present invention enables continuous movement of the jog input unit 110, thus enabling a user to quickly move to the desired menu item. According to the method, menu items are organized hierarchically corresponding to the directions of movement of the jog input unit 110 and a menu item is selected in such a way as to visually distinguish it from others.

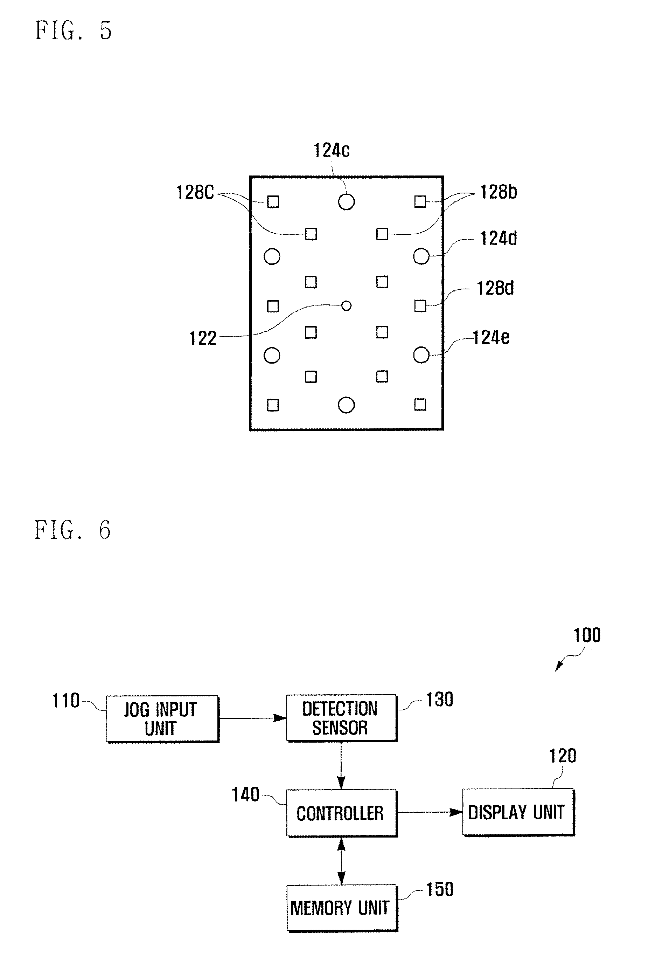

Referring to FIG. 5, points to which first depth menu items 124c, 124d, and 124e are allocated are distributed around a reference point 122. Further, points to which second depth menu items 128b, 128c, and 128d are allocated are distributed around each_of the first depth menu items 124c, 124d, and 124e. The second depth menu items 128b, 128c, and 128d may overlap other second depth menu items. For example, the second depth menu item 128b may be displayed around two adjacent first depth menu items 124c and 124d. The second depth menu item 128d may be displayed with respect to two adjacent first depth menu items 124d and 124e.

A configuration of a portable device 100 according to another exemplary embodiment of the present invention is described in detail with reference to the block diagram of Fig. 6 is a block diagram illustrating a configuration of a portable device according to another exemplary embodiment of the present invention.

Referring to FIG. 6, the portable device 100 includes a jog input unit 110, a display unit 120, a detection sensor 130, a controller 140, and a memory unit 150.

As described earlier, the jog input unit 110 is movable within a predetermined region in at least four directions (for example, six directions). When the jog input unit 110 is moved in any direction, i.e., the jog input unit is at its idle position, the jog input unit 110 is hereinafter deemed to be at a "reference position". When the jog input unit 110 is moved in a specific direction, it is hereinafter deemed to be at a "movement position".

Movement positions of the jog input unit 110 are illustrated in FIG. 3. In the present embodiment, the predetermined region within which the jog input unit 110 is movable is the movement space 104 (shown in FIGS. 2A, 2B and 3) formed on the main body 102 shown in FIGS. 1, 2A, and 2B) in a polygonal shape having at least four sides. However, the predetermined region is not limited to the movement space but may be any defined region that can detect movement of the jog input unit 110. The jog input unit 110 is movable in directions corresponding to vertexes of the polygonal movement space. The movement positions of the jog input unit 110 are also located at the vertexes of the polygonal movement space.

The controller 140 controls the display unit 120 to visually display a menu item in response to an input from the jog input unit 110. To achieve this function, the display unit 120 may distribute menu items in directions in which the jog input unit is movable. If the jog input unit 110 is moved in a specific direction, a menu item corresponding to the direction of movement of the jog input unit 110 is activated and visually displayed. Further, submenu items can be visually displayed around the activated menu item.

The detection sensor 130 detects an input from the jog input unit 110. If a user presses or moves the jog input unit 110 for manipulation, the detection sensor 130 detects a change in a physical state that occurs within the jog input unit 110, produces a signal corresponding to the change, and outputs the signal to the controller 140.

The controller 140 controls the display unit 120 to display menu items. When the controller 140 receives a signal representing the position of the jog input unit 110, it controls the display unit 120 to display a menu item corresponding to the position of the jog input unit 110. In particular, if the received position of the jog input unit 110 is a reference position, the controller 140 controls the display unit 120 to visually display a reference point corresponding to the reference position and first depth menu items corresponding to movement positions of the jog input unit 110. Further, if the received position of the jog input unit 110 is a movement position, the controller 140 activates a first depth menu item corresponding to the movement position and controls the display unit 120 to visually display the activated first depth menu item, and then controls the display unit 120 to display second depth menu items corresponding to movement positions of the jog input unit 110 with respect to the first depth menu item.

The memory unit 150 stores programs for executing a method for displaying a menu, and data generated while executing the programs. For example, the memory unit 150 may store a control program for controlling the operations of activating and visually displaying a menu item on the display unit 120, position information about points on the display unit 120 to which menu items are allocated, information about mapping an input from the jog input unit 110 to a corresponding menu item, and icons used to visually display menu items.

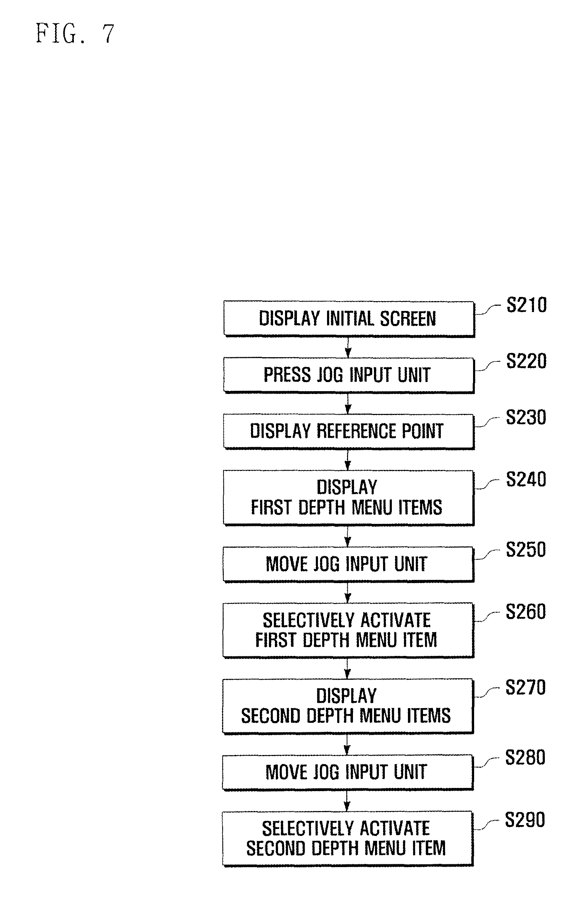

FIG. 7 is a flowchart illustrating a method for displaying a menu in the portable device 100 according to another exemplary embodiment of the present invention.

Referring to FIGS. 6 and 7, the controller 140 controls the display unit 120 to display an initial screen, in step S210. An example of the initial screen is illustrated above in FIG. 1. If the user presses the jog input unit 110, the detection sensor 130 detects an input from the jog input unit 110 and outputs a signal representing the input to the controller 140, in step S220. In this case, the jog input unit 110 is at a reference position where it does not move in any direction. An example of the manner of manipulating the jog input unit 110 by pressing is illustrated in FIG. 2A.

The controller 140 then controls the display unit 120 to display a reference point, in step S230. That is, upon receiving the signal generated by pressing the jog input unit 110 at the reference position, the controller 140 displays the reference point at the center of the display unit 120. An example of displaying the reference point 122 is illustrated in FIG. 4A.

Thereafter, the controller 140 displays first depth menu items around the reference point, in step S240. The first depth menu items are displayed at points corresponding to movement positions of the jog input unit 110, which are allocated as illustrated in FIG. 5. An example of the first depth menu items 124 displayed around the reference point 122 is illustrated in FIG. 4B. The first depth menu items displayed in at step S240 may be preset by the user.

If the user then moves the jog input unit 110 by pushing or pulling, the detection sensor 130 detects the movement and outputs a signal representing the movement to the controller 140, in step S250. An example of manipulating the jog input unit 110 by moving is illustrated in FIG. 2B.

The controller 140 then activates the selected first depth menu item, in step S260. More specifically, when the detection sensor 130 detects a movement position of the jog input unit 110 at step S250, the controller 140 activates a first depth menu item located at the movement position of the jog input unit 110 and controls the display unit 120 to display the activated first depth item. The steps of activating the selected first depth menu items 124a and 124b are illustrated in FIGS. 4C and 4D, respectively. Referring to FIGS. 4C and 4D, the remaining unselected first depth menu items and the reference point 122 are deactivated and the connecting line 126 between the reference point 122 and the activated first depth menu item is displayed.

Thereafter, the controller 140 controls the display unit 120 to display second depth menu items around the activated first depth menu item, in step S270. The second depth menu items are displayed at points allocated corresponding to movement positions of the jog input unit 110, as illustrated in FIG. 5. Examples of displaying the second depth menu items 128 around the activated first depth menu items 124a and 124b are illustrated in FIGS. 4E and 4F, respectively. The second depth menu items 128 displayed at step S270 may be preset by the user.

Subsequently, if the user moves the jog input unit 110 in another direction, the detection sensor 130 detects the movement and outputs a signal representing the movement to the controller 140, in step S280. The controller 140 activates a second depth menu item corresponding to the movement position and controls the display unit 120 to display the activated second depth menu item, in step S290. The remaining unselected second depth menu items, all of the first depth menu items, and the reference point are inactivated. An example of activating the selected second depth menu item 128a is illustrated in FIG. 4G.

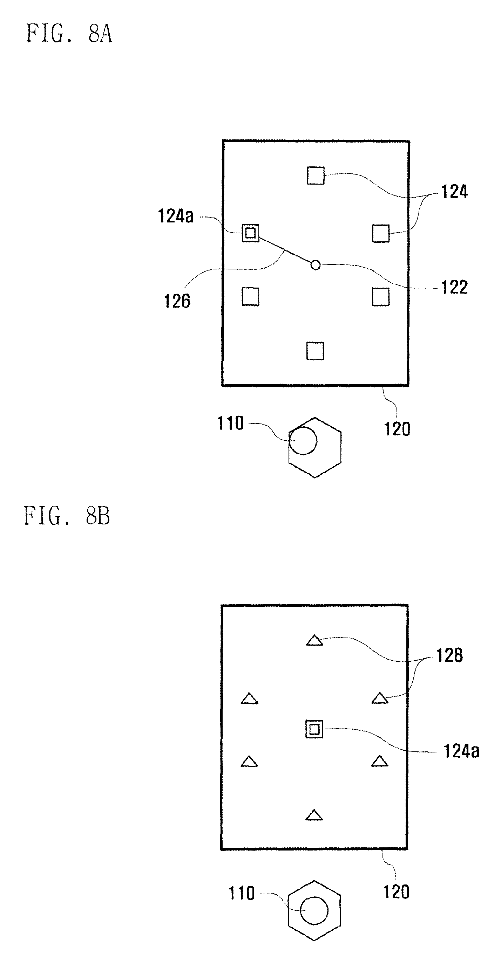

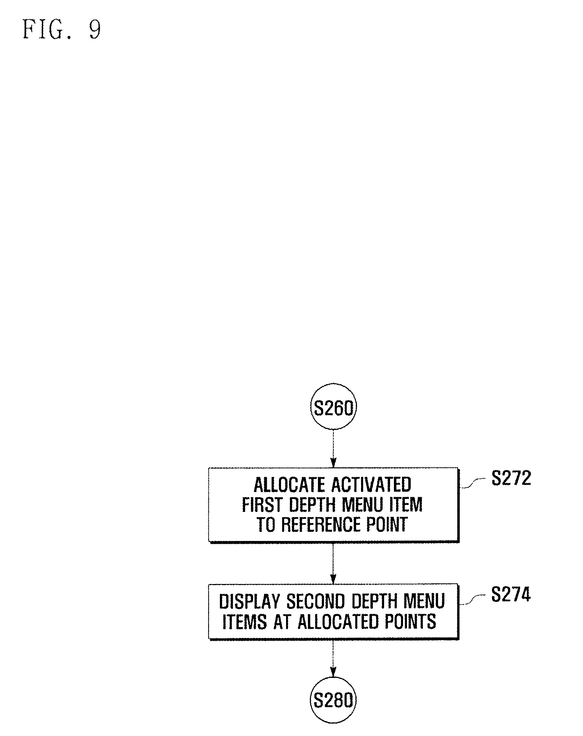

A method for displaying a menu in a portable device can be implemented in a different way than the aforementioned embodiment illustrated in FIG. 7. A method for displaying a menu in a portable device according to another exemplary embodiment of the present invention is described with reference to FIGS. 8A, 8B, and 9

Referring to FIGS. 8A and 9, the method according to the present exemplary embodiment includes the steps S210 through S260 of the previous exemplary embodiment, as illustrated in FIG. 7. That is, if a user presses the jog input unit 110, a reference point 122 is displayed and the first depth menu items 124 are displayed around the reference point 122. Thereafter, if the jog input unit 110 is moved to the first depth menu item 124a located at the movement position of the jog input unit 110,the first depth menu item 124a is selectively activated at step S260.

Referring to FIGS. 8B and 9, in order to display second depth menu items around the activated first depth menu item 124a, the controller 140 allocates the activated first depth menu item 124a to the reference point 122 and controls the display unit 120 to display the activated first depth menu item 124a at the reference point 122, in step S272. The controller 140 controls the display unit 120 to display the second depth menu items 128 at points to which the first depth menu items 124 are allocated, in step S274. The method according to the present exemplary embodiment continues by performing the steps S280 and S290 of the previous exemplary embodiment. That is, if movement of the jog input unit 110 is detected, the detection sensor 130 outputs a signal representing the movement to the controller 140, in step S280, and the controller 140 activates the second depth menu item 128 selected corresponding to the movement, in step S290.

As described above, the method for displaying a menu according to the present embodiment involves displaying the first depth menu items 124 around the reference point 122, allocating the selected first depth menu item 124a to the reference point 122, and displaying the second depth menu items 128 around the first depth menu item 124a. That is, according to the present embodiment, the selected first depth menu item 124a is moved from its initial position to the center of the display unit 120, thus enabling the second depth menu items 128 to be allocated to all available movement positions of the jog input unit 110.

To implement the method for displaying a menu according to the present embodiment, the jog input unit 110 may be manipulated in a slightly different way than that illustrated in FIG. 7. That is, the jog input unit 110 moves in a specific direction to select the first depth menu item 124a as illustrated in FIG. 8A, and thereafter returns to the reference position as illustrated in FIG. 8B. That is, the user pushes or pulls the jog input unit 110 in a desired direction and then immediately releases their finger from the jog input unit 110 instead of continuing to press the jog input unit 110. This enables the jog input unit 110 to immediately return to the reference position by an elastic force.

While in the above description, the first and second depth menu items are displayed using a method for displaying a menu according to the exemplary embodiments, the same method can be applied to submenu items at a lower level beneath the second depth menu items. Further, the menu display method according to the present invention can be applied to an execution screen of a specific application in the same manner as for an initial screen. For example, the present invention may be applied when submenu items are displayed after entering into a menu such as music-listening, movie-viewing, or picture-taking. Further, the menu display method according to the present invention may be used together with a conventional menu display method. In this case, a manner in which menu items are displayed can be selected by the user. According to the menu display method of the present invention, frequently used menu icons may also be configured to have different visual attributes such as color.

The present invention can be applied to any type of portable device having a display unit and a movable input unit, for example a mobile phone, a Personal Digital Assistant (PDA), an MPEG-1 Audio Layer 3 (MP3) player, a Portable Multimedia Player (PMP), a Digital Multimedia Broadcasting (DMB) receiver, and a navigation terminal.

As described above, the present invention enables convenient, intuitive menu search and movement to a new screen on a display unit of a portable device, thus enabling a user to quickly find a desired menu item. The present invention also enables a sequential manipulation of an input unit of a portable device such as a jog input unit that can freely move in multiple directions, thus enabling the user to easily access a desired menu or screen.

In particular, unlike a conventional menu display method that enables a user only to sequentially move through menu items for selection, the present invention provides direct movement to a desired menu item, thus enabling simple, efficient access and selection of menu items. The present invention also enables arrangement of menu items corresponding to the direction of movement of the input unit, thus improving user convenience in menu access and selection. The present invention also enables movement of the input unit within a polygonal movement space, thus improving precision of input and user manipulation performance.

Although specific terms are employed herein, they are used in a generic and descriptive sense only and not for purposes of limitation. While the present invention has been particularly shown and described with reference to embodiments thereof, it will be understood by those of ordinary skill in the art that various changes in form and details may be made therein without departing from the spirit and scope of the present invention as defined by the following claims.

## Claims

1. A portable device comprising:
an input unit movable within a predetermined region in at least four directions;
a display unit for allocating a menu item to at least one direction in which the input unit is movable, displaying the allocated menu items, activating a menu item allocated to a direction in which the input unit is moved, and displaying the activated menu item; and
a controller for controlling the display unit to display menu items at positions corresponding to directions in which the input unit is movable and at positions corresponding to a direction in which the input unit is moved.

2. The device of claim 1, wherein the predetermined region has a polygonal shape with at least four sides, and vertexes of the polygonal shape are located corresponding to the directions in which the input unit is movable.

3. The device of claim 1, wherein the display unit is controlled by the controller to display submenu items of the activated menu item around the activated menu item at positions corresponding to the directions in which the input unit is movable.

4. A portable device comprising:
an input unit having a reference position and movement positions located in at least four directions with respect to the reference position;
a detection sensor for detecting a position of the input unit;
a display unit for displaying menu items at positions corresponding to the movement positions of the input unit; and
a controller for receiving the position of the input unit from the detection sensor and controlling the display unit to display menu items according to the received position.

5. The device of claim 4, wherein if the received position of the input unit is the reference position, the controller controls the display unit to display a reference point corresponding to the reference position and first depth menu items at positions corresponding to the movement positions of the input unit with respect to the reference position.

6. The device of claim 5, wherein if the received position of the input unit moves to one of the movement positions, the controller controls the display unit to activate a first depth menu item corresponding to a new position of the input unit and display the activated first depth menu item, and to display second depth menu items of the activated first depth menu item at positions corresponding to the movement positions of the input unit with respect to the first depth menu item.

7. The device of claim 4, wherein the vertexes of a polygonal shape are located at the movement positions ofi input unit.

8. A method for displaying a menu in a portable device having a display unit and an input unit movable within a predetermined region in at least four directions, the method comprising:
allocating a menu item to at least one direction in which the input unit is movable and displaying the allocated menu items on the display unit;
receiving a direction in which the input unit is moved; and
activating a menu item allocated to the direction of movement of the input unit.

9. The method of claim 8, further comprising displaying submenu items of the activated menu item around the activated menu item at positions corresponding to the directions in which the input unit is movable.

10. A method for displaying a menu in a portable device having a display unit and having an input unit having a reference position and movement positions located in at least four directions with respect to the reference position, the method comprising:
receiving a position of the input unit;
if the received position of the input unit is the reference position, displaying a reference point corresponding to the reference position on the display unit; and
displaying first depth menu items on the display unit at positions corresponding to the movement positions.

11. The method of claim 10, further comprising:
if the received position of the input unit moves to one of the movement positions, activating a first depth menu item corresponding to a new position of the input unit and displaying the activated first depth menu item; and
displaying second depth menu items of the activated first depth menu item around the activated first depth menu item at positions corresponding to the movement positions.

12. A method for displaying a menu in a portable device having a display unit and an input unit movable within a predetermined region in at least four directions, the method comprising:
receiving a signal generated by pressing the input unit;
displaying a reference point on the display unit;
displaying first depth menu items at positions to which the first depth menu items are allocated and that are distributed around the reference point;
receiving a signal generated by moving the input unit in a first direction; and
activating a first depth menu item corresponding to the first direction among the first depth menu items.

13. The method of claim 12, further comprising displaying second depth menu items of the activated first depth menu item at positions to which the second depth menu items are allocated and that are distributed around the activated first depth menu item.

14. The method of claim 13, further comprising:
receiving a signal generated by moving the input unit in a second direction; and
activating a second depth menu item corresponding to the second direction among the second depth menu items.

15. The method of claim 12, further comprising:
allocating the activated first depth menu item to the reference point and displaying the first depth menu item; and
displaying second depth menu items of the first depth menu item at positions to which the first depth menu items are allocated.

16. The method of claim 15, further comprising:
receiving a signal generated by moving the input unit in a second direction; and
activating a second depth menu item corresponding to the second direction among the second depth menu items.

17. The method of claim 12, wherein the predetermined region has a polygonal shape with at least four sides, and vertexes of the polygonal shape are located corresponding to the directions in which the input unit is movable.

18. The method of claim 12, wherein further comprising displaying a connecting line between the reference point and the activated first depth menu item.
